# EUROPÄISCHE PATENTSCHRIFT

(11) **EP 2 877 364 B1**
(45) Veröffentlichungstag und Bekanntmachung des Hinweises auf die Patenterteilung: **01.06.2016**
(21) Anmeldenummer: 13735280.3
(22) Anmeldetag: 11.07.2013
(51) Int. Cl.: B60L 11/12, B60L 11/18

(54) **ANTRIEBSSYSTEM FÜR EIN ELEKTROFAHRZEUG UND VERFAHREN ZUM LADEN EINER BATTERIE MIT VERBRENNUNGSMOTOR**
DRIVE SYSTEM FOR AN ELECTRIC VEHICLE AND METHOD FOR CHARGING A BATTERY WITH A COMBUSTION ENGINE
SYSTÈME D'ENTRAÎNEMENT POUR VÉHICULE ÉLECTRIQUE ET PROCÉDÉ PERMETTANT DE CHARGER UNE BATTERIE AU MOYEN D'UN MOTEUR À COMBUSTION INTERNE

(30) Priorität: 26.07.2012 DE 102012213129
(43) Veröffentlichungstag der Anmeldung: 03.06.2015
(73) Patentinhaber: Robert Bosch GmbH, 70442 Stuttgart (DE); Samsung SDI Co., Ltd., Yongin-si Gyeonggi-do 446-577 (KR)
(72) Erfinder: FETZER, Joachim, 73342 Bad-Ditzenbach (DE); BUTZMANN, Stefan, 71717 Beilstein (DE)
(74) Vertreter: Bee, Joachim
(86) Internationale Anmeldenummer: PCT/EP2013/064646
(87) Internationale Veröffentlichungsnummer: WO 2014/016126

(56) Entgegenhaltungen:
- DE-A1-102010 041 068
- DE-A1-102010 041 075
- DE-A1-102010 064 325

## Beschreibung

Die vorliegende Erfindung betrifft ein Antriebssystem für ein Elektrofahrzeug mit einem Elektromotor, einer Traktionsbatterie zur Versorgung des Elektromotors, einer Asynchronmaschine, und einem Verbrennungsmotor zum Antreiben der Asynchronmaschine. Insbesondere betrifft die Erfindung ein Antriebssystem für ein Elektrofahrzeug, bei dem eine Asynchronmaschine dazu angeordnet ist, für eine Reichweitenverlängerung des Elektrofahrzeugs die Traktionsbatterie auf ein Steuersignal hin zu laden. Ferner betrifft die Erfindung ein Verfahren zum Laden einer mehrere Batteriestränge aufweisenden Traktionsbatterie, wobei die Traktionsbatterie mittels einer Asynchronmaschine und einem dazu ein Reihe angeordneten Verbrennungsmotor geladen wird.

### Stand der Technik

Kraftfahrzeuge mit Elektromotor, wie Elektroautos oder Hybridfahrzeuge, sind bekannt. Dabei sind für Elektrofahrzeuge insbesondere Batterien mit Lithium-Ionen-Technologie als Energiespeicher geeignet. Diese zeichnen sich unter anderem durch eine hohe Energiedichte sowie eine äußerst geringe Selbstentladung aus. Der Antrieb des Fahrzeugs kann mit einer elektrischen Maschine erfolgen, die als mehrphasiger, bevorzugt dreiphasiger, Elektromotor ausgelegt ist und von der Traktionsbatterie, insbesondere der Lithium-Ionen-Traktionsbatterie, versorgt wird.

Heutzutage haben Elektrofahrzeuge aufgrund begrenzter Akkukapazität und begrenzter Ladegeschwindigkeit in der Regel kürzere Reichweiten als Fahrzeuge mit Verbrennungsmotor und sind oft erst nach längerer Aufladezeit von beispielsweise ein bis zwei Stunden wieder einsatzbereit. Aus diesem Grund wird häufig auf sogenannte Range Extender (REX) zurückgegriffen. Mit "Range Extender", auch als "Reichweitenverlängerer" bezeichnet, ist bei einem Elektrofahrzeug ein zusätzliches Aggregat gemeint, mit dem die Reichweite des Fahrzeugs erhöht werden kann. So kann ein vom Elektrofahrzeug mitgeführter Verbrennungsmotor dazu verwendet werden, einen Generator anzutreiben, mit dem die Traktionsbatterie geladen wird. Alternativ oder zusätzlich kann die Energie des Verbrennungsmotors auch zum Antrieb des Fahrzeugs verwendet werden. Zum Laden der Batterie kann für den Verbrennungsmotor und den Generator ein gleichmäßiger Betrieb gewählt und somit ein optimaler Betriebspunkt eingehalten werden, wodurch sich ein verbesserter Wirkungsgrad für den Range Extender ergibt.

In DE 10 2010 041 068 wird ein Antriebssystem mit einem elektrischen Motor und mehreren Batteriemodulsträngen die einen Batteriedirektumrichter bilden beschrieben bei dem die verschiedenen Batteriemodulstränge mit Hilfe einer Gleichstromquelle geladen werden.

In der DE 10 2009 001 705 A1 wird ein Elektrofahrzeug mit einem Batterieladegerät beschrieben, bei dem ein als Range Extender angeordneter Verbrennungsmotor mittels durch das Batterieladegerät bereitgestellter Energie gestartet wird. Dabei wird das Batterieladegerät bevorzugt bidirektional ausgelegt.

In der DE 10 2007 004 172 A1 wird ein Antriebssystem für ein Fahrzeug beschrieben, das einen Elektromotor aufweist. Ferner ist ein Verbrennungsmotor und ein damit in Reihe geschalteter Generator vorhanden, mit dem die Traktionsbatterie des Elektromotors geladen wird.

In der DE 10 2010 031 159 A1 wird ein Range Exender in Form eines Verbrennungsmotors und eine Asynchronmaschine beschrieben. Im Generatorbetrieb wird durch die verbrennungsmotorisch betriebene Asynchronmaschine über einen zwischengeschalteten Gleichrichter die Traktionsbatterie geladen. Im motorischen Betrieb wird die Asynchronmaschine über einen Wechselrichter von der Traktionsbatterie versorgt und kann zum Starten und Beschleunigen des Verbrennungsmotors eingesetzt werden.
Ferner wurden in früheren Patentanmeldungen der Anmelderin Traktionsbatterien mit mehreren, insbesondere drei, Batteriesträngen beschrieben. Diese können phasenversetzt mit einer bestimmten Frequenz getaktet werden, wobei jeder der Batteriestränge je eine der Anschlussklemmen eines mehrphasigen Elektromotors versorgt. Derartige Batterien mit mehreren, zueinander phasenversetzt betriebenen Batteriesträngen werden auch als Batteriedirektkonverter bezeichnet.

Wenn ein Antriebssystem mit einer solchen mehrstrangigen Traktionsbatterie mit einem Range Extender betrieben wird, ist jedoch die Schwierigkeit beziehungsweise Problematik zu bewältigen, dass nunmehr nicht ein, sondern beispielsweise drei Batteriestränge vorliegen, die allesamt geladen werden müssen.

### Offenbarung der Erfindung

Erfindungsgemäß wird ein Antriebssystem für ein Elektrofahrzeug zur Verfügung gestellt, das eine elektrische Maschine, eine Traktionsbatterie zur Versorgung der elektrischen Maschine, eine Asynchronmaschine und einen Verbrennungsmotor zum Antreiben der Asynchronmaschine aufweist. Die Asynchronmaschine ist dazu angeordnet, für eine Reichweitenverlängerung des Elektrofahrzeugs die Traktionsbatterie auf ein Steuersignal hin zu laden. Die Traktionsbatterie umfasst mehrere Batteriestränge mit einstellbarer Ausgangsspannung zur Erzeugung zueinander phasenversetzter Spannungsverläufe. Jeder Batteriestrang ist sowohl zur Speisung eines der Phasenanschlüsse der elektrischen Maschine vorgesehen als auch mit einem Phasenanschluss der Asynchronmaschine verbunden.

Ferner wird ein Verfahren zum Laden einer mehrere Batteriestränge aufweisenden Traktionsbatterie zur Verfügung gestellt, bei dem die Traktionsbatterie mittels einer Asynchronmaschine und einem dazu in Reihe angeordneten Verbrennungsmotor geladen wird. Dabei wird die Traktionsbatterie dazu angesteuert, zur Ansteuerung eines Elektromotors zueinander phasenversetzte Ausgangsspannungen mit vorbestimmter und/oder variabler Frequenz mittels der Batteriestränge zu erzeugen. Ferner wird die Asynchronmaschine verfahrensgemäß durch den Verbrennungsmotor mit einer Frequenz betrieben, die größer ist als die Frequenz der Drei-Phasen-Traktionsbatterie, sodass in der Asynchronmaschine ein negativer Schlupf vorliegt.

Nach einem Aspekt der Erfindung wird ferner ein Kraftfahrzeug, insbesondere Hybrid- oder Elektroauto, geschaffen, das mit dem erfindungsgemäßen Antriebssystem ausgestattet ist.

Somit wird erfindungsgemäß eine Verschaltungs-Topologie für einen Elektroantrieb mit Range Extender vorgeschlagen, bei der die Asynchronmaschine zum Laden der Traktionsbatterie auf eine direkte Art und Weise mit der Traktionsbatterie verbunden wird. Genauer gesagt, es erfolgt ein Anschluss der Traktionsbatterie so, dass insbesondere einer oder mehrere Gleichrichter entfallen können. Dies wird erfindungsgemäß insbesondere dadurch erreicht, dass die Ausgänge der Batteriemodulstränge direkt mit den Phasenanschlüssen der von dem Verbrennungsmotor betriebenen Asynchronmaschine verbunden werden. Somit kann bei geeigneter Frequenzwahl die Asynchronmaschine als Generator arbeiten, der simultan sämtliche Batteriestränge lädt.

Es wird bevorzugt, dass die Ausgänge der Batteriemodulstränge ebenfalls direkt mit den Klemmen des Elektromotors verbunden sind. Dadurch wird die Erfindung vorteilhaft auf einen Batteriedirektkonverter angewandt, der erfindungsgemäß auf eine direkte Weise durch den Asynchronmotor geladen wird.

Die Erfindung ist insbesondere vorteilhaft auf einen dreiphasigen Elektromotor und eine entsprechend dreiphasige Asynchronmaschine anzuwenden, wobei die Traktionsbatterie dementsprechend ebenfalls dreiphasig ist beziehungsweise drei getaktete Batteriestränge aufweist. Somit werden bei dieser Ausführungsform drei Batteriestrang-Ausgänge, beispielsweise die drei positiven Batteriestrang-Ausgänge, jeweils mit genau einem von den drei Phasenanschlüssen des Elektromotors und gleichzeitig mit jeweils genau einem von den drei Phasenanschlüssen des Asynchronmotors verbunden.

Vorzugsweise hat das Antriebssystem eine Steuereinheit, die sicherstellt, dass die Asynchronmaschine mit einer Drehzahl oder Ausgangsfrequenz betrieben wird, die höher ist als die Frequenz der Taktung der mehrphasigen Traktionsbatterie, wodurch ein zuverlässiges Laden der Batteriestränge der Traktionsbatterie durch die Asynchronmaschine gewährleistet werden kann.

Der erfindungsgemäße Elektromotor kann ein Asynchronmotor oder ein Synchronmotor sein.

Bei einer Ausführungsform der Erfindung werden die Ausgangsspannungen der Batteriestränge dadurch erreicht, dass die Batteriestränge jeweils mehrere Batteriemodule aufweisen, die mittels Ansteuerung selektiv aktiviert oder deaktiviert werden können. Dabei trägt lediglich im aktivierten Zustand eines Batteriemoduls dessen Batteriemodulspannung zu einer Ausgangsspannung des entsprechenden Batteriestranges bei.

Ferner hat es sich als eine günstige Bauform erwiesen, wenn die Batteriemodule jeweils zwei Schalter umfassen, von denen jeweils einer im geschlossenen und der andere im geöffneten Zustand betrieben wird. Dabei sind die Schalter derart angeordnet, dass je nach Schaltstellung der Schalter eines jeweiligen Batteriemoduls die Batteriezellen des Batteriemoduls dem entsprechenden Batteriestrang zugeschaltet sind oder in dem Batteriestrang leitend überbrückt werden.

Verfahrensgemäß wird bei einer Weiterbildung der Erfindung eine Drehzahl der Asynchronmaschine derart geregelt, dass während des Betriebs der Traktionsbatterie die Frequenz, mit der die Asynchronmaschine betrieben wird, und die Frequenz der Traktionsbatterie in einem vorbestimmten Verhältnis, insbesondere in einem festen Verhältnis, zueinander stehen. Dadurch kann ein weiterhin verbesserter Wirkungsgrad erreicht werden.

Es wird bevorzugt, die Asynchronmaschine und den Elektromotor derart zu gestalten und zu betreiben, dass für eine Drehzahl n_{ASM} der Asynchronmaschine und eine Drehzahl n_{M} des Elektromotors die Relation 1,2 n_{M} ≤ n_{ASM} ≤ 1,4n_{M} eingehalten wird.

Bevorzugt ist die beanspruchte Batterie eine Lithium-Ionen-Batterie.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein Prinzipschaltbild eines Batteriestrangs, mit dem eine einstellbare Ausgangsspannung erzeugt werden kann, nach einer Ausführungsform der Erfindung, und
Figur 2 ein Antriebssystem nach einer Ausführungsform der Erfindung, bei dem ein Range Extender mit einem Asynchrongenerator in Reihe geschaltet ist.

### Ausführungsformen der Erfindung

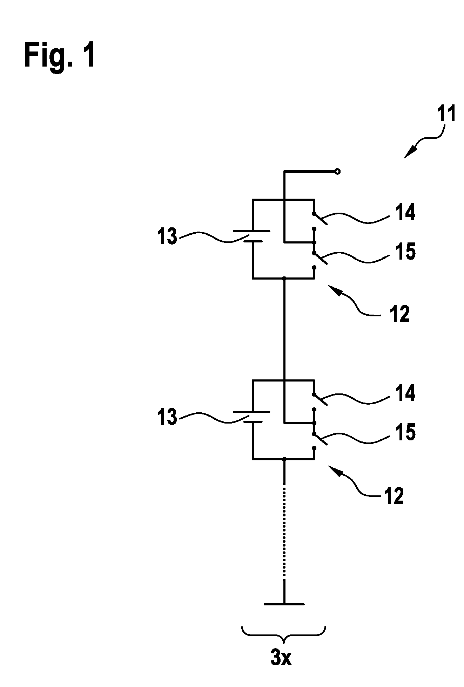

In Figur 1 wird ein Prinzipschaltbild eines Batteriestrangs 11 dargestellt, mit dem eine einstellbare Ausgangsspannung erzeugt werden kann und mit dem die Traktionsbatterie des erfindungsgemäßen Antriebssystems verwirklicht werden kann. Dabei werden in der Traktionsbatterie bevorzugt drei solcher Batteriestränge 11 angeordnet. Ein Batteriestrang 11 weist eine Vielzahl von Batteriemodulen 12 auf, von denen jeder jeweils mindestens eine Batteriezelle 13 umfasst. Die Batteriemodule 12 sind derart ausgelegt, dass sie dem Batteriestrang 11 wahlweise zugeschaltet werden können, sodass der Batteriestrang 11 eine einstellbare Ausgangsspannung erzeugt. Wie in Figur 1 zu erkennen ist, weist jedes Batteriemodul 12 zwei Schalter 14, 15 auf. Falls bei einem Batteriemodul 12 der Schalter 15 geöffnet und der Schalter 14 geschlossen ist, so ist das Batteriemodul 12 dem Batteriestrang 11 zugeschaltet, sodass seine Batteriemodulspannung zu der Ausgangsspannung des Batteriestrangs 11 beiträgt. Wird umgekehrt jedoch der Schalter 15 geschlossen, wohingegen der Schalter 14 geöffnet wird, so ist das Batteriemodul 12 überbrückt und trägt nicht mehr zur Batteriestrangspannung bei, bis es wieder zugeschaltet wird. Dazu werden die Batteriemodule 12 von einer Steuereinheit (in Figur 1 nicht dargestellt) angesteuert und mit Ansteuerungssignalen versorgt, gemäß denen ein Zuschalten oder Überbrücken von einzelnen Batteriemodulen 12 nach einer vorgegebenen Sequenz erfolgt. Dadurch wird beispielsweise ein stufenförmiger Spannungsverlauf erzeugt, mit dem ein sinusförmiger Wechselspannungsverlauf approximiert werden kann. Obwohl in der Zeichnung pro Batteriemodul 12 nur eine Batteriezelle 13 gezeigt ist, kann ein Batteriemodul 12 auch mehrere Batteriezellen 13 umfassen. In je mehr Batteriemodule 12 die Batteriezellen 13 eines Batteriestrangs 11 eingeteilt sind, desto feiner kann die Batteriestrang-Ausgangsspannung eingestellt werden. In der erfindungsgemäßen Traktionsbatterie sind mehrere solcher Batteriestränge 11 vorhanden, bevorzugt drei.

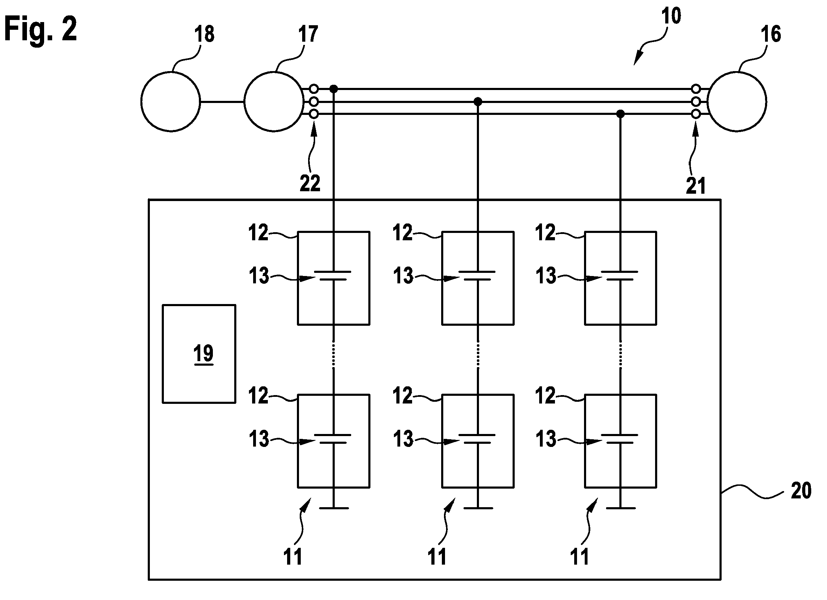

In der Figur 2 wird ein Antriebssystem nach einer Ausführungsform der Erfindung gezeigt, bei dem ein als Range Extender fungierender Verbrennungsmotor 18 mit einem Asynchrongenerator 17 in Reihe geschaltet ist. In der Figur 2 sind sowohl die Batteriestränge 11 als auch der von den Batteriesträngen 11 versorgte Elektromotor 16 gezeigt. Ferner ist in der Batterie 20 eine Steuereinheit 19 angeordnet. Die Steuereinheit dient dazu, die Ansteuerungssignale für die Batteriemodule 12 beziehungsweise die Schalter zu generieren. Die Erfindung ist jedoch nicht auf eine solche Ausführungsform beschränkt. Alternativ können die Batteriemodule 12 auch von einem zentralen Steuergerät (nicht dargestellt) angesteuert werden.

Die Batteriestränge 11 sind mit ihren Ausgängen jeweils mit einem der Phasenanschlüsse 21 des Elektromotors 16 verbunden, sodass jeder Phasenanschluss 21 von genau einem Batteriestrang 11 gespeist wird. Dazu sind die Ausgänge der Batteriestränge 11 mit Leitungen verbunden, die jeweils sowohl mit einem Phasenanschluss 21 des Elektromotors 16 als auch mit einem Phasenanschluss 22 der Asynchronmaschine 17 gekoppelt sind. Dadurch, dass die Traktionsbatterie 20 auf diese direkte Weise mit der Asynchronmaschine 17 gekoppelt ist, wird ein Laden der Asynchronmaschine auf eine besonders einfache Weise ermöglicht. Dies kann insbesondere ohne Vorsehung von gesonderten zwischengeschalteten Gleichrichtern geschehen. In einem Ladebetrieb, bei dem der als Range Extender fungierende Verbrennungsmotor 18 eingesetzt wird und die Asynchronmaschine 17 antreibt, wird die Asynchronmaschine 17 derart betrieben, dass in der Asynchronmaschine ein Schlupf vorliegt.

Dazu wird die Drehzahl n_{ASM} der Asynchronmaschine leicht höher eingestellt, als die Drehzahl n_{M} des Elektromotors beziehungsweise die Frequenz, mit der der Elektromotor angesteuert wird. Der Elektromotor kann ein Synchronmotor oder ein Asynchronmotor sein. Es wird bevorzugt, dass während des Betriebs der Traktionsbatterie die Frequenz, mit der die Asynchronmaschine betrieben wird, und die Frequenz der Traktionsbatterie in einem vorbestimmten Verhältnis, insbesondere in einem festen Verhältnis, zueinander stehen.

In einer vorteilhaften Variante werden die Asynchronmaschine und der Elektromotor derart betrieben, dass für die Drehzahl n_{ASM} der Asynchronmaschine und die Drehzahl n_{M} des Elektromotors die Relation 1,2 n_{M} ≤ n_{ASM} ≤ 1,4n_{M} eingehalten wird, während die Traktionsbatterie 20 und die Asynchronmaschine 17 und der Verbrennungsmotor 18 in Betrieb sind.

## Patentansprüche

1. Antriebssystem (10) für ein Elektrofahrzeug, mit einem Elektromotor (16), einer Traktionsbatterie (20) zur Versorgung des Elektromotors (16), einer Asynchronmaschine (17), und einem Verbrennungsmotor (18) zum Antreiben der Asynchronmaschine (17), wobei die Asynchronmaschine (17) dazu angeordnet ist, für eine Reichweitenverlängerung des Elektrofahrzeugs die Traktionsbatterie (20) auf ein Steuersignal hin zu laden, **gekennzeichnet dadurch, dass**
die Traktionsbatterie (20) mehrere Batteriestränge (11) mit einstellbarer Ausgangsspannung zur Erzeugung zueinander phasenversetzter Spannungsverläufe umfasst und jeder Batteriemodulstrang (11) sowohl zur Speisung eines der Phasenanschlüsse (21) des Elektromotors (16) vorgesehen ist als auch mit einem Phasenanschluss (22) der Asynchronmaschine verbunden ist.

2. Antriebssystem (10) nach Anspruch 1, wobei das Antriebssystem (10) eine Steuereinheit (19) aufweist und dazu eingerichtet ist, die Asynchronmaschine (17) derart zu betreiben, dass die Ausgangsfrequenz der Asynchronmaschine (17) höher ist als eine Frequenz der mehrphasigen Traktionsbatterie (10), sodass die Batteriezellen (13) der Batteriestränge (11) der Traktionsbatterie (20) durch die Asynchronmaschine (17) geladen werden können.

3. Antriebssystem (10) nach Anspruch 1 oder 2, wobei die Traktionsbatterie (20), die Asynchronmaschine (17), und der Elektromotor (16) jeweils dreiphasig ausgelegt sind und der Elektromotor (16) als Asynchronmotor oder als Synchronmotor gestaltet ist.

4. Antriebssystem (10) nach einem der vorhergehenden Ansprüche, wobei jeder Batteriestrang (11) mehrere Batteriemodule (12) aufweist, die mittels Ansteuerung selektiv aktiviert oder deaktiviert werden können, wobei im aktivierten Zustand die Batteriemodulspannung eines jeweiligen Batteriemoduls (12) zu einer Ausgangsspannung des entsprechenden Batteriestranges (11) der Traktionsbatterie (20) beiträgt.

5. Antriebssystem (10) nach einem der Ansprüche 1 bis 4, wobei jedes Batteriemodul (12) zwei Schalter (14, 15) umfasst, von denen jeweils einer im geschlossenen und der andere im geöffneten Zustand betrieben wird und die derart angeordnet sind, dass je nach Schaltstellung der Schalter (14, 15) eines jeweiligen Batteriemoduls (12) die Batteriezellen (13) des Batteriemoduls (12) dem entsprechenden Batteriestrang (11) zugeschaltet sind oder in dem Batteriestrang (11) leitend überbrückt werden.

6. Verfahren zum Laden einer mehrere Batteriestränge (11) aufweisenden Traktionsbatterie (20) mittels einer Asynchronmaschine (17) und einem dazu ein Reihe angeordneten Verbrennungsmotor (18), **dadurch gekennzeichnet, dass**
die Traktionsbatterie (20) dazu angesteuert wird, zur Ansteuerung eines Elektromotors (16) zueinander phasenversetzte Ausgangsspannungen mit vorbestimmter und/oder variabler Frequenz mittels der Batteriestränge (11) zu erzeugen, und die Asynchronmaschine (17) durch den Verbrennungsmotor (18) mit einer Frequenz betrieben wird, die größer ist als die Frequenz der Traktionsbatterie (20), sodass in der Asynchronmaschine (17) ein negativer Schlupf vorliegt.

7. Verfahren nach Anspruch 6, wobei eine Drehzahl der Asynchronmaschine (17) derart geregelt wird, dass während der Betriebs der Traktionsbatterie (20) die Frequenz, mit der die Asynchronmaschine (17) betrieben wird, und die Frequenz der Traktionsbatterie (20) in einem vorbestimmten Verhältnis, insbesondere in einem festen Verhältnis, zueinander stehen.

8. Verfahren nach Anspruch 6 oder 7, wobei die Asynchronmaschine (17) derart von dem Verbrennungsmotor (18) betrieben wird, dass für eine Drehzahl n_{ASM} der Asynchronmaschine (17) und eine Drehzahl n_{M} des Elektromotors die Relation 1,2 n_{M} ≤ n_{ASM} ≤ 1,4n_{M} eingehalten wird.

9. Kraftfahrzeug, insbesondere Hybrid- oder Elektroauto, welches das Antriebssystem (10) nach einem der Ansprüche 1 bis 5 aufweist.

## Claims

1. Drive system (10) for an electric vehicle, having an electric motor (16), a traction battery (20) for the purpose of supplying the electric motor (16), an asynchronous machine (17) and an internal combustion engine (18) for the purpose of driving the asynchronous machine (17), wherein the asynchronous machine (17) is arranged so as to charge the traction battery (20) in response to a control signal for the purpose of extending the range of the electric vehicle, **characterized in that**
the traction battery (20) comprises multiple battery strings (11) having an adjustable output voltage for the purpose of generating voltage curves that are phase-offset with respect to one another and each battery module string (11) is both provided for the purpose of supplying energy to one of the phase connectors (21) of the electric motor (16) and is also connected to a phase connector (22) of the asynchronous machine.

2. Drive system (10) according to Claim 1, wherein the drive system (10) comprises a control unit (19) and is designed so as to operate the asynchronous machine (17) in such a manner that the output frequency of the asynchronous machine (17) is higher than a frequency of the multiphase traction battery (10) so that the battery cells (13) of the battery strings (11) of the traction battery (20) can be charged by means of the asynchronous machine (17).

3. Drive system (10) according to Claim 1 or 2, wherein the traction battery (20), the asynchronous machine (17), and the electric motor (16) are embodied in each case in a three-phase manner and the electric motor (16) is embodied as an asynchronous motor or as a synchronous motor.

4. Drive system (10) according to any one of the preceding claims, wherein each battery string (11) comprises multiple battery modules (12) that can be selectively activated or deactivated by means of a control process, wherein in the activated state, the battery module voltage of a respective battery module (12) contributes to an output voltage of the corresponding battery string (11) of the traction battery (20).

5. Drive system (10) according to any one of the preceding Claims 1 to 4, wherein each battery module (12) comprises two switches (14, 15) and in each case one switch is operated in the closed state and the other is operated in the opened state and said switches are arranged in such a manner that depending upon the switching position of the switches (14, 15) of a respective battery module (12), the battery cells (13) of the battery module (12) are connected to the corresponding battery string (11) or are bridged in a conductive manner into the battery string (11).

6. Method for charging a traction battery (20) that comprises multiple battery strings (11) by means of an asynchronous machine (17) and an internal combustion engine (18) that is arranged in series with said asynchronous machine, **characterized in that**
the traction battery (20) is controlled so as to generate by means of the battery strings (11) output voltages that are phase-offset with respect to one another for the purpose of controlling an electric motor (16), said output voltages having a predetermined and/or variable frequency and the asynchronous machine (17) is operated by means of the internal combustion engine (18) with a frequency that is higher than the frequency of the traction battery (20) so that a negative slip prevails in the asynchronous machine (17).

7. Method according to Claim 6, wherein a rotational speed of the asynchronous machine (17) is regulated in such a manner that during the operation of the traction battery (20) the frequency with which the asynchronous machine (17) is operated and the frequency of the traction battery (20) are in a predetermined ratio with respect to one another, in particular in a fixed ratio.

8. Method according to Claim 6 or 7, wherein the asynchronous machine (17) is operated by the internal combustion engine (18) in such a manner that the relation 1.2 n_{M} ≤ n_{ASM} ≤ 1.4n_{M} is maintained for a rotational speed n_{ASM} of the asynchronous machine (17) and a rotational speed n_{M} of the electric motor.

9. Motor vehicle, in particular hybrid or electric car that comprises the drive system (10) according to any one of Claims 1 to 5.

## Revendications

1. Système de propulsion (10) pour un véhicule électrique, comprenant un moteur électrique (16), une batterie de traction (20) destinée à alimenter le moteur électrique (16), une machine asynchrone (17) et un moteur à combustion interne (18) destiné à entraîner la machine asynchrone (17), la machine asynchrone (17) étant disposée pour charger la batterie de traction (20) lors d'un signal de commande en vue d'une prolongation de l'autonomie de déplacement du véhicule électrique, **caractérisé en ce que**
la batterie de traction (20) comprend plusieurs branches de batterie (11) ayant une tension de sortie réglable pour générer des courbes de tension mutuellement déphasées et chaque branche de module de batterie (11) est à la fois conçue pour alimenter l'une des bornes de phase (21) du moteur électrique (16) et reliée à une borne de phase (22) de la machine asynchrone.

2. Système de propulsion (10) selon la revendication 1, avec lequel le système de propulsion (10) possède une unité de commande (19) et est conçu pour faire fonctionner la machine asynchrone (17) de telle sorte que la fréquence de sortie de la machine asynchrone (17) est supérieure à une fréquence de la batterie de traction (10) multiphasée, de sorte que les cellules de batterie (13) des branches de batterie (11) de la batterie de traction (20) peuvent être chargées par la machine asynchrone (17).

3. Système de propulsion (10) selon la revendication 1 ou 2, avec lequel la batterie de traction (20), la machine asynchrone (17) et le moteur électrique (16) sont respectivement de conception triphasée et le moteur électrique (16) est réalisé sous la forme d'un moteur asynchrone ou d'un moteur synchrone.

4. Système de propulsion (10) selon l'une des revendications précédentes, avec lequel chaque branche de batterie (11) comprend plusieurs modules de batterie (12) qui peuvent être activés ou désactivés sélectivement au moyen d'une commande, la tension de module de batterie d'un module de batterie (12) respectif à l'état activé contribuant à une tension de sortie de la branche de batterie (11) correspondante de la batterie de traction (20).

5. Système de propulsion (10) selon l'une des revendications 1 à 4, avec lequel chaque module de batterie (12) comprend deux commutateurs (14, 15) dont respectivement l'un est utilisé à l'état fermé et l'autre à l'état ouvert et qui sont disposés de telle sorte que suivant la position de commutation des commutateurs (14, 15) d'un module de batterie (12) respectif, les cellules de batterie (13) du module de batterie (12) sont mises en circuit dans la branche de batterie (11) correspondante ou sont pontés de manière conductrice dans la branche de batterie (11).

6. Procédé pour charger une batterie de traction (20) comprenant plusieurs branches de batterie (11) au moyen d'une machine asynchrone (17) et un moteur à combustion interne (18) disposé en série avec celle-ci, **caractérisé en ce que**
la batterie de traction (20) est commandée pour générer des tensions de sortie mutuellement déphasées servant à commander un moteur électrique (16) avec une fréquence prédéfinie et/ou variable au moyen des branches de batterie (11), et la machine asynchrone (17) est pilotée par le moteur à combustion interne (18) à une fréquence qui est supérieure à la fréquence de la batterie de traction (20), de sorte qu'il se produit une dérive négative dans la machine asynchrone (17).

7. Procédé selon la revendication 6, selon lequel une vitesse de rotation de la machine asynchrone (17) est régulée de telle sorte que pendant le fonctionnement de la batterie de traction (20), la fréquence à laquelle fonctionne la machine asynchrone (17) et la fréquence de la batterie de traction (20) se trouvent dans un rapport prédéfini entre elles, notamment dans un rapport fixe.

8. Procédé selon la revendication 6 ou 7, selon lequel la machine asynchrone (17) est pilotée par le moteur à combustion interne (18) de telle sorte que pour une vitesse de rotation n_{ASM} de la machine asynchrone (17) et une vitesse de rotation n_{M} du moteur électrique, la relation 1,2n_{M} ≤ n_{ASM} ≤ 1,4n_{M} est respectée.

9. Véhicule automobile, notamment automobile hybride ou électrique qui est équipé du système de propulsion (10) selon l'une des revendications 1 à 5.
